# EUROPÄISCHE PATENTSCHRIFT

(11) **EP 3 861 230 B1**
(45) Veröffentlichungstag und Bekanntmachung des Hinweises auf die Patenterteilung: **28.12.2022**
(21) Anmeldenummer: 19782595.3
(22) Anmeldetag: 02.10.2019
(51) Int. Cl.: F16G 15/12, F16G 13/12

(54) **KETTE, INSBESONDERE SCHWERLASTKETTE**
CHAIN, IN PARTICULAR A HEAVY DUTY HOIST CHAIN
CHAÎNE, EN PARTICULIER CHAÎNE POUR CHARGE LOURDE

(30) Priorität: 05.10.2018 DE 202018105723 U
(43) Veröffentlichungstag der Anmeldung: 11.08.2021
(73) Patentinhaber: Westdeutscher Drahtseil-Verkauf Dolezych GmbH & Co. KG, 44147 Dortmund (DE)
(72) Erfinder: DOLEZYCH, Tim, 44225 Dortmund (DE)
(74) Vertreter: Andrejewski - Honke Patent- und Rechtsanwälte Partnerschaft mbB
(86) Internationale Anmeldenummer: PCT/EP2019/076779
(87) Internationale Veröffentlichungsnummer: WO 2020/070230

(56) Entgegenhaltungen:
- EP-A1- 3 303 875
- WO-A1-2009/115249
- WO-A2-2017/077141
- DE-T2- 69 706 465
- DE-U1- 7 930 165
- DE-U1- 9 209 857
- JP-U- S5 746 583
- US-A- 510 134

## Beschreibung

Die Erfindung betrifft eine Kette, insbesondere Schwerlastkette, mit mehreren untereinander verbundenen Kettengliedern, die jeweils aus Kunststofffäden hergestellt sind, wobei jedes Kettenglied als wenigstens ein endlos gelegter Ring aus geschlagenem Seilwerk auf Basis der Kunststofffäden ausgebildet ist, und wobei das geschlagene Seilwerk im Wesentlichen aus zumindest einem fortlaufenden wendeiförmig um einen Kern herumgelegten Seil aus den Kunststofffäden besteht.

In der Praxis werden oftmals Schwerlastketten eingesetzt, deren Kettenglieder aus Stahl hergestellt sind. Daneben gibt es heutzutage vermehrt Ketten und insbesondere Schwerlastketten, welche aus Kunststofffäden aufgebaut sind, wie dies generell in der EP 2 122 194 B1 beschrieben wird. Dort geht es um eine solche Kette, die zum Festmachen oder Verankern von Booten, Festzurren von Ladung für den Straßen-, Bahn-, Wasser- und Lufttransport sowie für Beförderungs-, Aufzug-, Aufhäng- und Hebeanwendungen geeignet ist. Zu diesem Zweck sind die Kettenglieder aus Multifilamentgarnen aufgebaut, die ihrerseits Polyolefin-Multifilamentgarne darstellen.

Daneben gibt es andere Ketten, deren Kettenglieder aus kurzen Fasern aufgebaut sind, die adhäsiv miteinander verbunden werden. Eine solche Kette, wie sie in der EP 1 063 449 A1 beschrieben wird, ist hinsichtlich ihrer Herstellung aufwendig.

Im Rahmen der EP 3 303 875 A1 bzw. WO 2016/189116 A1 oder WO 2009/115249 A1 wird eine gattungsgemäße Kette beschrieben. Diese Kette umfasst mehrere Kettenglieder, die jeweils einen Streifen aufweisen, der Schussgarne und Kettgarne umfasst. Die einzelnen Streifen des Kettengliedes können eine Vielzahl von Windungen bilden, wobei der Streifen eine Längsachse aufweist und jede Windung des Streifens eine Verdrillung bzw. Verdrehung um die Längsachse darstellt.

Die EP 2 858 936 B1 beschreibt schließlich eine textile Kette, bei welcher die einzelnen Kettenglieder aus Streifen hergestellt sind, die ihrerseits als beispielsweise gewebtes Band aus Kunststofffäden ausgelegt sind. Dadurch werden Streifen gebildet, die um ein Vielfaches von 180° um seine jeweilige Längsachse verdreht werden. Dadurch wird eine geschlossene Schlaufe gebildet, welche insgesamt das Kettenglied definiert.

Als Folge dieser Herstellung ist jedoch mit einer insgesamt reduzierten Bruchfestigkeit zu rechnen. Das heißt, die mit Hilfe einer solchen Kette übertragbaren Kräfte und damit einhergehend die Bruchkraft ist gegenüber einem nicht gewundenen Ring reduziert, was sich im Endeffekt auf sogenannte "Einschnürungsverluste" zurückführen lässt. Tatsächlich kommt es bei der Verbindung der Ringe untereinander an Koppelstellen zu Einschnürungen des Kunststoffbandes, welche die maximal darstellbare Bruchkraft reduzieren. Konkret werden hier Einschnürungsverluste von bis zu 50 % gegenüber einem nicht gewundenen Ring beobachtet. Hier will die Erfindung insgesamt Abhilfe schaffen.

Der Erfindung liegt das technische Problem zugrunde, eine derartige Kette so weiter zu entwickeln, dass die Bruchfestigkeit verbessert ist und möglichst Einschnürungsverluste auf ein Minimum reduziert werden.

Zur Lösung dieser technischen Problemstellung ist eine gattungsgemäße Kette im Rahmen der Erfindung dadurch gekennzeichnet, dass das Seil als rundgewebtes Seil ausgebildet ist, wobei sich die runde Querschnittsform des Seiles dadurch ergibt, dass an dieser Stelle mit einem schlauchförmigen Rundgewebe und gegebenenfalls einer Einlage gearbeitet wird.

Insbesondere handelt es sich bei jedem Kettenglied um ein sogenanntes Grummet oder einen Taukranz, also zumindest einen endlos gearbeiteten Ring aus dem geschlagenen Seilwerk. Das Seilwerk wird dabei seinerseits aus wenigstens einem oder zwei Seilen hergestellt, die umeinander wendeiförmig geschlagen werden. Dadurch kann auf den zusätzlich im Zentrum erforderlichen Kern meistens verzichtet werden. Im Regelfall wird an dieser Stelle mit wenigstens vier und insbesondere sechs und mehr Seilen gearbeitet, die jeweils fortlaufend wendeiförmig umeinander geschlagen werden und auf diese Weise das Seilwerk bilden, welches seinerseits den endlos gelegten Ring und damit das Kettenglied definiert.

Dabei wird seinerseits so vorgegangen, dass die jeweiligen Enden der Seile unter äußere Seile einer äußeren Seillage in Schlagrichtung geführt werden. Auf diese Weise formt das das jeweilige Kettenglied definierende Grummet insgesamt einen homogenen Ring aus dem geschlagenen Seilwerk, welcher beispielsweise in einen Rundhaken zum Heben von Lasten eingehängt werden kann. Außerdem lassen sich hierdurch die einzelnen Kettenglieder bzw. Grummets durch unmittelbares Ineinandergreifen zu der Kette vereinigen. Grundsätzlich ist es aber auch möglich, dass die Kettenglieder nicht ineinandergreifen, sondern vielmehr über zusätzliche Verbindungsmittel miteinander gekoppelt sind.

Bei diesen Verbindungsmitteln kann es sich um metallische Rundhaken, Ringe aus Kunststoffgurten oder vergleichbare ringförmige Verbindungsmittel handeln. Außerdem lässt sich die erfindungsgemäße Kette besonders einfach verkürzen, um eine Anpassung an die jeweiligen Einsatzzwecke zu ermöglichen. Dabei kann beispielhaft mit sogenannten Verkürzungslasthaken gearbeitet werden oder auch entsprechend gestalteten Ratschen oder Kettenspannern, die eine entsprechende Verkürzung der Kette dadurch ermöglichen, dass einzelne Kettenglieder eine unbelastete Schlaufe definieren.

Das jeweilige Seil ist dabei erfindungsgemäß als gewebtes, nämlich rundgewebtes Seil aus Kunststofffasern ausgebildet. Die Kunststofffasern stellen ihrerseits Bestandteile von Kunststofffäden dar, die zu dem Seil verarbeitet, regelmäßig verseilt werden. Bei einem solchen rundgewebten Seil wird so vorgegangen, dass sich dieses entsprechend aus Kett- und Schussfäden wie bei jedem anderen Webprodukt zusammensetzt. Die Auslegung ist dabei insgesamt so getroffen, dass die Kettfäden überwiegend in Umfangsrichtung des Ringes verlaufen. Die Schussfäden verlaufen demgegenüber senkrecht hierzu, meistens radial zum Ring. Der runde oder überwiegend runde Querschnitt des einzelnen Seiles wird dabei so realisiert und umgesetzt, dass die Kettfäden verschiedene Lagen des Gewebes definieren. Ein kreis- oder nahezu kreisförmiger Querschnitt des gewebten und insbesondere rundgewebten Seiles lässt sich nun beispielsweise dadurch realisieren, dass Kettfäden gleichen Durchmessers mit unterschiedlicher Anzahl in der betreffenden Lage angeordnet sind, so dass sich der gewünschte Kreis oder scheibenartige Querschnitt des Seiles einstellt.

Es ist aber auch möglich, dass die Kettfäden unterschiedliche Durchmesser aufweisen. In diesem Zusammenhang kann beispielsweise so vorgegangen werden, dass jeweils äußere Lagen der Kettfäden einen größeren Durchmesser als innere Lagen des auf diese Weise gebildeten kreisförmigen Querschnittes des Seiles besitzen. Demgegenüber wird man für die die Lagen miteinander verbindenden Schussfäden im Regelfall mit Schussfäden gleichen Durchmessers arbeiten. Damit an dieser Stelle die betreffenden Schussfäden nicht nur die Kettfäden einer Lage miteinander verbinden, sondern auch die wenigstens zwei oder mehr Lagen des Rundgewebes untereinander, wird im Allgemeinen mit einer Vorrichtung zum Rundweben gearbeitet, wie sie prinzipiell in der EP 0 059 483 A1 beschrieben wird. Auf die dortigen Ausführungen und Erläuterungen sei ausdrücklich Bezug genommen.

Ganz besonders bevorzugt ist der Rückgriff auf ein rundgewebtes Seil, welches im Zuge eines Einfach- oder Doppelschlauchwebverfahrens hergestellt worden ist. D.h., das rundgewebte Seil verfügt über ein äußeres Schlauchgewebe aus Kett- und Schussfäden. Das Schlauchgewebe kann seinerseits ein- oder mehrlagig ausgelegt sein. Außerdem kann eine vom Schlauchgewebe als Mantel umhüllte Einlage realisiert werden. Bei der Einlage mag es sich um ein Gelege aus Kunststofffäden handeln. Auch andere Einlagen sind denkbar.

Jedenfalls greift die Erfindung auf ein rundgewebtes Seil aus den Kunststofffasern zurück, wobei sich die runde Querschnittsform des Seiles dadurch ergibt, dass an dieser Stelle mit einem schlauchförmigen Rundgewebe und ggf. eine Einlage gearbeitet wird. Das Schlauchgewebe kann grundsätzlich auch mehrlagig ausgelegt sein.

Das auf diese Weise hergestellte gewebte bzw. rundgewebte Seil kann nun seinerseits hergestellt werden, indem die in Längsrichtung verlaufenden Kettfäden (inklusive der sie verbindenden Schussfäden) miteinander verseilt werden, das heißt um eine mittige Rotationssymmetrieachse wendeiförmig herumgedreht werden. Dadurch steht am Ende dieses Vorganges ein einzelnes Seil bzw. rundgewebtes Seil aus den betreffenden Kunststofffasern zur Verfügung.

Die einzelnen Fäden bzw. Kunststofffäden des Seils, d. h. sowohl die Kettfäden als auch die Schussfäden, sind jeweils als Multifilamentfäden aus den Kunststofffasern ausgebildet. Bei diesen Multifilamentfäden handelt es sich um Fäden, die jeweils aus den Kunststofffasern mit praktisch unbegrenzter Länge bestehen. Um nun aus den Kunststofffasern unbegrenzter Länge die Multifilamentfäden zur Herstellung der jeweiligen Kett- und Schussfäden zu realisieren, werden die einzelnen Kunststofffasern beispielsweise miteinander verdreht. Es ist aber auch möglich, dass die Kunststofffasern durch Verwirbelung den nötigen Zusammenhalt für die Realisierung der Fäden aufweisen. Da an dieser Stelle Multifilamentfäden eingesetzt werden, bestehen diese aus einer Vielzahl an Kunststofffasern, typischerweise mehr als zehn Kunststofffasern, wobei bis zu 40 oder 50 Kunststofffasern je Faden oder sogar noch mehr zum Einsatz kommen können.

Als besonders bevorzugt hat sich der Rückgriff auf hochzugfeste Fäden bzw. Kunststofffäden mit einer feinheitsbezogenen Höchstzugkraft von wenigstens5 cN/dtex herausgestellt. Meistens liegt die feinheitsbezogene Höchstzugkraft bei 8 cN/dtex undmehr. Ganz besonders bevorzugt wird eine feinheitsbezogene Höchstzugkraft von wenigstens 10 cN/dtex beobachtet. Die feinheitsbezogene Höchstzugkraft oder auch Feinheitsfestigkeit bezeichnet die Höchstzugkraft des betreffenden Fadens in N (Newton) bezogen auf seine Fadenfeinheit in dtex. Berücksichtigt man, dass Stahlfäden bzw. Stahllitzen eine feinheitsbezogene Höchstzugkraft von typischerweise 2 cN/dtex aufweisen, so sind die erfindungsgemäß eingesetzten Fäden wenigstens fünfmal zugfester als Stahl (10 cN/dtex und mehr).

Tatsächlich werden im Regelfall sogar hochzugfeste Fäden mit einer feinheitsbezogenen Höchstzugkraft von insbesondere 20 cN/dtex und mehr sowie vorzugsweise mit einer Höchstzugkraft von mindestens 30 cN/dtex eingesetzt. Dadurch werden sogar Zugfestigkeiten der Fäden zur Verfügung gestellt, die das Fünfzehnfache derjenigen von Stahl aufweisen (30 cN/dtex im Vergleich zu 2 cN/dtex).

Als Folge hiervon ist das aus den betreffenden Fäden hergestellte Grummet mit einer deutlich erhöhten Bruchkraft im Vergleich zu einem Grummet aus Drahtseilen ausgebildet, wie es im Stand der Technik nach der DE 79 30 165 U1 beschrieben wird. Hinzu kommt, dass die an dieser Stelle eingesetzten Kunststofffasern zur Realisierung der Fäden bzw. Kunststofffäden und damit der Seile insbesondere als Thermoplastfasern ausgelegt sind. Hier hat sich der Rückgriff auf Kunststoffe wie Polyethylen (PE), Polyamid (PA), Polyethylenterephthalat (PET), Polypropylen (PP) einzeln oder in Kombination als besonders günstig erwiesen. Die Aufstellung gilt selbstverständlich nicht abschließend.

Derartige Thermoplastfasern verfügen typischerweise über eine Dichte bzw. ein spezifisches Gewicht, welches geringfügig kleiner als dasjenige von Wasser ausgebildet ist, so dass das hieraus hergestellte Grummet insgesamt schwimmfähig ist. Beispielsweise werden für Polyethylen (PE) Dichten von 0,92 bis 0,95 g/cm³ beobachtet. Vergleicht man diese Dichte mit derjenigen von Stahl, welche bei 7,85 bis 7,87 g/cm³ liegt, so wird deutlich, dass die Dichte von Stahl bzw. eines Stahlseiles zwar nahezu achtmal so hoch wie diejenige der eingesetzten Kunststoffseile ausgebildet ist. Zugleich beträgt die feinheitsbezogene Bruchkraft der erfindungsgemäß eingesetzten Kunststoffseile in etwa das Fünfzehnfache der bekannten Stahlseile, so dass insgesamt das Verhältnis Materialgewicht / Bruchkraft bei dem erfindungsgemäß realisierten Grummet im Vergleich zu demjenigen eines Grummets aus Stahlseilen lediglich 0,5 beträgt.

Das heißt, das erfindungsgemäße Grummet verfügt über eine lediglich halb so große Masse bzw. ein halb so großes Gewicht im Vergleich zu einem Grummet aus Stahlseilen gleicher Bruchkraft. Als Folge hiervon ist auch die Handhabung der erfindungsgemäßen Grummets deutlich erleichtert und kann oftmals je nach Auslegung auf zusätzliche Hebezeuge verzichtet werden. Vielmehr ist ein Benutzter meistens in der Lage, aus eigener Kraft das Grummet zu handhaben und beispielsweise in einen Haken einzuhängen, was bei einem Stahlseil gleicher Bruchkraft mit demgegenüber doppeltem Gewicht nicht (mehr) möglich ist. Vergleichbares gilt natürlich ebenso für die erfindungsgemäße Kette, die mit den als Grummets ausgebildeten Kettengliedern ausgerüstet ist.

Folglich wird im Ergebnis ein Grummet aus Kunststoffseilen zur Verfügung gestellt, welches im Vergleich zu einem Grummet aus Stahlseilen bei gleicher Bruchkraft ein deutlich geringeres Gewicht (lediglich ca. 50 %) aufweist, dementsprechend viel einfacher als bisher zu handhaben ist. Hinzu kommt, dass aufgrund des Rückgriffes auf ein oder mehrere Kunststoffseile zur Herstellung des erfindungsgemäßen Grummets Beschädigungen der Oberfläche einer beispielsweise hiermit bewegten Last praktisch ausgeschlossen sind. Ferner ist das erfindungsgemäße Grummet prinzipiell schwimmfähig, kann folglich bei einem Einsatz beispielsweise im Hafenbereich nicht verloren gehen. Gleiches gilt für den Fall, dass das Grummet bei Offshore-Anwendungen zum Einsatz kommt. Hinzu kommt, dass das erfindungsgemäße Grummet und die daraus hergestellte Kette witterungsbeständig ist und Korrosionen naturgemäß nicht zeigt.

Nach weiterer vorteilhafter Ausgestaltung kommen zur Realisierung der Fäden Kunststofffasern aus einem Polyolefin mit ultrahoher Molekularmasse zum Einsatz. Tatsächlich liegt die Molekularmasse des im Rahmen der Erfindung eingesetzten Polyolefins bei mindestens 400.000 g/mol. Außerdem beträgt die Feinheit der auf diese Weise realisierten Fäden bzw. Kunststofffäden wenigstens 20 dtex. Derartige Kunststofffasern aus einem Polyolefin mit ultrahoher Molekularmasse und deren Herstellung sind seit langem bekannt. Verwiesen wird hierzu beispielsweise auf die EP 0 205 960 A2. Entsprechende Produkte werden auf dem Markt beispielsweise mit der Kennzeichnung Dyneema^{®} angeboten.

Als weiterer Vorteil ist zu berücksichtigen, dass sich die Bruchkraft des Ringes des erfindungsgemäßen Grummets bzw. des jeweiligen Kettengliedes aus der Summe der einzelnen Seilbruchkräfte abzüglich lediglich eines Legekraftverlustes bemisst. Tatsächlich beträgt der Legekraftverlust erfindungsgemäß weniger als 20 % und insbesondere weniger als 15 % sowie vorzugsweise ca. 10 % der Summe der einzelnen Seilbruchkräfte. Als Folge hiervon kann die mit Hilfe eines solchen Grummets realisierte Bruchkraft - im Unterschied zu den zuvor bereits beschriebenen Rundschlingen - relativ genau prognostiziert und eingestellt werden. Dazu wird lediglich die Summe der einzelnen Seilbruchkräfte gebildet. Wenn an dieser Stelle beispielsweise sechs Seilstränge miteinander verschlungen werden, so bemisst sich die Bruchkraft des auf diese Weise hergestellten endlos gelegten Ringes aus dem Sechsfachen der Seilbruchkraft des einzelnen Seiles. Von dieser Summe ist dann lediglich der zuvor angegebene Legekraftverlust abzuziehen. Dadurch kann das Grummet hinsichtlich seiner erreichbaren Bruchkraft definiert gefertigt und an die tatsächlichen Erfordernisse angepasst werden. Das gilt dann natürlich auch für das jeweils aus dem Grummet hergestellte Kettenglied.

Auf diese Weise lassen sich insgesamt Kettenglieder definieren, die über eine Bruchfestigkeit bzw. eine Bruchkraft von zumindest 1 kN verfügen. Meistens werden sogar Bruchkräfte von 5 kN, insbesondere von 10 kN und vorzugsweise sogar solche von wenigstens 20 kN beobachtet. Die hierdurch realisierte Kette lässt sich dabei insgesamt zum Lagern, Sichern, Heben und Handhaben von Frachtgut, Ladung, aber auch Fahrzeugen vorteilhaft einsetzen. Durch den Rückgriff auf Kunststofffäden werden etwaige Oberflächenbeschädigungen vermieden. Außerdem ist die solchermaßen hergestellte Kette besonders witterungsbeständig ausgebildet. Hierin sind die wesentlichen Vorteile zu sehen.

Im Folgenden wird die Erfindung anhand einer lediglich ein Ausführungsbespiel darstellenden Zeichnung näher erläutert; es zeigen:
- Fig. 1: verschiedene Phasen bei der Herstellung eines Grummets aus einem endlos gelegten Ring aus geschlagenem Seilwerk und folglich die Produktion eines Kettengliedes,
- Fig. 2A, 2B: zwei unterschiedliche Varianten des eingesetzten Seiles im Querschnitt,
- Fig. 2C: eine besonders bevorzugte Variante des eingesetzten Seiles und
- Fig. 3 und 4: die erfindungsgemäße Kette in zwei prinzipiellen Varianten.

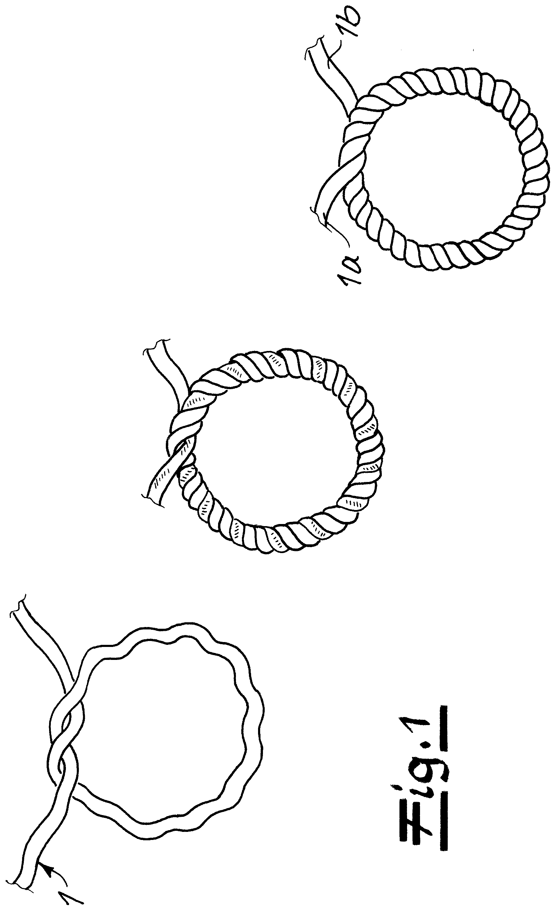

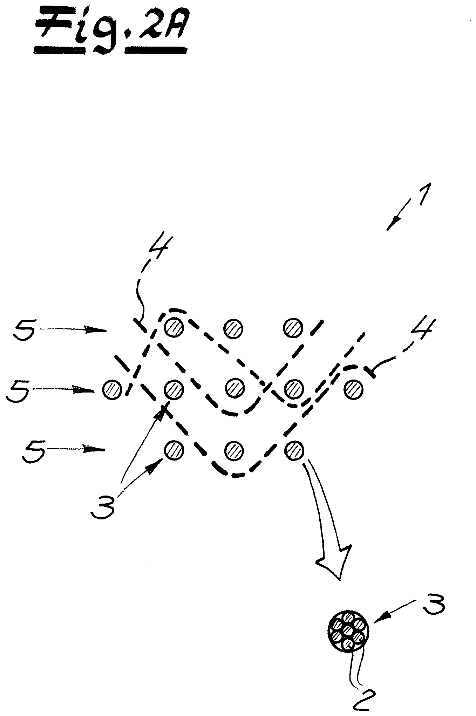

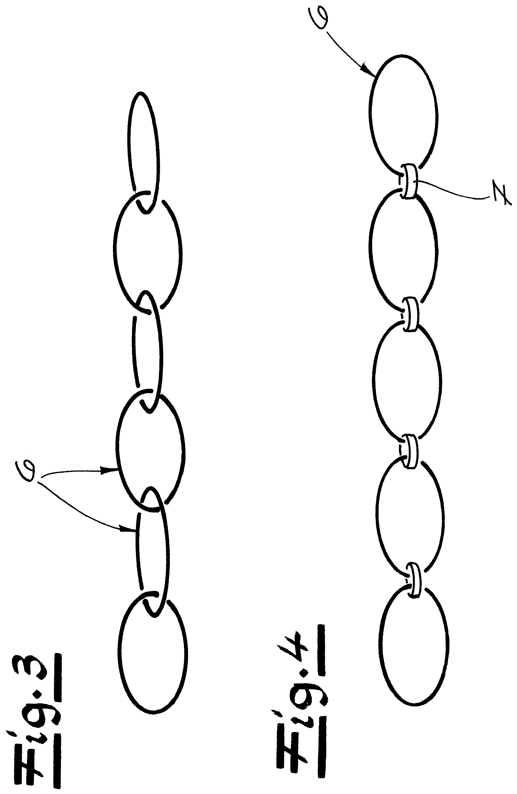

In den Fig. 1 sowie 2A bis 2C ist jeweils ein Grummet dargestellt, welches mit wenigstens einem endlos gelegten und in der Fig. 1 gezeigten Ring aus geschlagenem Seilwerk ausgerüstet ist. Grundsätzlich können auch mehrere Ringe realisiert werden. Das in den Fig. 1 und 2A bis 2C im Detail dargestellte und nachfolgend noch näher beschriebene Grummet dient nach dem Ausführungsbeispiel und ausweislich der Fig. 3 und 4 dazu, eine Kette aus mehreren untereinander verbundenen Kettengliedern 6 zu realisieren. Bei der in der Fig. 3 dargestellten Kette sind die einzelnen Kettenglieder 6 so miteinander verbunden, dass die Kettenglieder 6 bzw. die an dieser Stelle vorgesehenen Grummets unmittelbar ineinandergreifen. Die Variante nach der Fig. 4 geht demgegenüber so vor, dass die einzelnen Kettenglieder 6 nicht ineinandergreifen, sondern vielmehr über jeweils zwischengeschaltete Verbindungsmittel 7 miteinander gekoppelt sind. Bei den Verbindungsmitteln 7 kann es sich um Stahlringe, endlose Kunststoffbänder oder vergleichbare Verbindungsmittel handeln. Die in den Fig. 3 und 4 dargestellte Kette lässt sich prinzipiell zum Lagern, Sichern, Heben und Handhaben von Frachtgut, Ladung, aber auch Fahrzeugen einsetzen, wie dies allgemein bekannt ist und im zuvor referierten Stand der Technik im Detail beschrieben wird.

Wie bereits erläutert, ist das jeweilige Kettenglied 6 als wenigstens ein endlos gelegter Ring aus geschlagenem Seilwerk auf Basis von Kunststofffäden und insbesondere als Grummet ausgebildet, wie es im Detail in den Fig. 1 und 2A bis 2C dargestellt ist. Das Seilwerk setzt sich seinerseits und im Wesentlichen aus zumindest einem fortlaufend wendeiförmig um einen Kern herumgelegten Seil 1 zusammen.

Nach dem Ausführungsbeispiel in der Fig. 1 erkennt man, dass an dieser Stelle ein einziges Seil 1 zum Einsatz kommt, welches fortlaufend wendeiförmig um sich selbst als Kern herumgelegt wird. Die beiden in diesem Zusammenhang schlussendlich verbleibenden Seilenden 1a und 1b im rechten Teil der Fig. 1 werden am Ende des Legevorganges jeweils in Schlagrichtung unter äußere Seile bzw. eine äußere Seillage geführt.

Das heißt, die beiden Seilenden 1a, 1b tauchen gleichsam unter die äußere Seillage ins Innere des Grummets ein und stehen nicht nach außen über, was prinzipiell auch möglich wäre. Nach dem Ausführungsbeispiel in der Fig. 1 wird mit einer Schlagrichtung im Uhrzeigersinn gearbeitet. Es kann aber auch mit einer Schlagrichtung im Gegenuhrzeigersinn das dargestellte Grummet hergestellt werden. Sofern mehrere wendeiförmig umeinander gedrehte Seile zum Einsatz kommen, sind grundsätzlich auch verschiedene Schlagrichtungen im Gegenuhrzeigersinn und im Uhrzeigersinn möglich und werden erfindungsgemäß abgedeckt.

Das Seil 1 setzt sich seinerseits aus Kunststofffasern 2 zusammen, wie man insbesondere anhand der Schnittdarstellungen durch das Seil 1 in den Fig. 2A bis 2C erkennt. Tatsächlich handelt es sich bei dem Seil 1 grundsätzlich um ein Kunststoffseil, das heißt ein Seil 1 aus einzelnen Kunststofffasern 2. Die Kunststofffasern 2 definieren ihrerseits Fäden bzw. Kunststofffäden 3, 4. Bei den Fäden 3 handelt es sich vorliegend um Kettfäden 3, während die Fäden 4 als Schussfäden 4 ausgebildet sind.

Die Kettfäden 4 verlaufen überwiegend in Längsrichtung, vorliegend in Umfangsrichtung des in der Fig. 1 dargestellten Ringes. Demgegenüber sind die Schussfäden 4 hierzu senkrecht orientiert, verlaufen überwiegend radial in Bezug auf den Ring. Um aus den Kunststofffasern 2 die einzelnen Fäden 3, 4 herstellen zu können, werden die Kunststofffasern 2 nach dem Ausführungsbeispiel miteinander verdreht, können aber auch durch Verwirbelung miteinander verbunden werden, wie dies einleitend bereits beschrieben wurde.

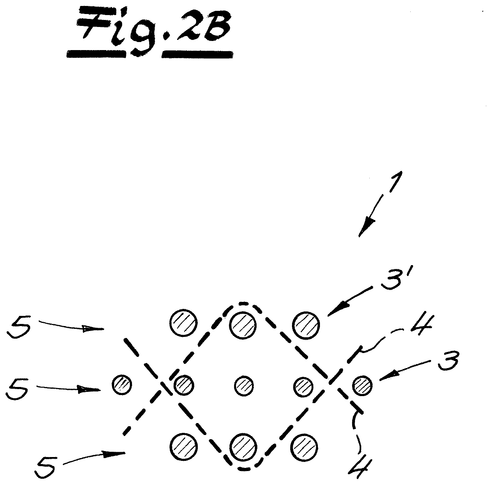

Nach dem Ausführungsbeispiel verfügen die Kettfäden 3 ausweislich der Variante nach der Fig. 2A über einen jeweils gleichen Durchmesser. Ähnliches gilt für die Schussfäden 4 bei dieser Variante, deren Durchmesser demjenigen der dortigen Kettfäden 3 entspricht. Im Rahmen der Variante nach der Fig. 2B wird jedoch mit Kettfäden 3 bzw. 3' unterschiedlichen Durchmessers gearbeitet, wohingegen bei dieser Variante erneut auf Schussfäden 4 gleichen Durchmessers zurückgegriffen wird. Tatsächlich erkennt man in der Fig. 2B Kettfäden 3 mit relativ kleinem Durchmesser oder Querschnitt, wohingegen die Kettfäden 3' in diesem Zusammenhang einen demgegenüber größeren Durchmesser aufweisen.

So oder so definieren die Kettfäden 3 bis 3' in Verbindung mit den Schussfäden 4 insgesamt das Seil 1 aus den Kunststofffasern 2. Dazu ist das Seil 1 insgesamt als rundgewebtes Seil 1 aus den Kettfäden 3, 3' und den Schussfäden 4 aufgebaut. Die Kettfäden 3 definieren in diesem Zusammenhang jeweils übereinander verschiedene Lagen 5, wie dies die Fig. 2A andeutet. Tatsächlich sind an dieser Stelle drei Lagen 5 an Kettfäden 3 realisiert, die über die jeweiligen Schussfäden 4 miteinander verwebt sind und insgesamt einen mehr oder minder kreisförmigen Querschnitt des Seils 1 beschreiben und vorgeben. Der Webvorgang kann dabei im Detail mit Hilfe einer Vorrichtung oder Maschine zum Rundweben vorgenommen werden, wie sie beispielhaft in der EP 0 059 483 A1 im Detail beschrieben wird, die einleitend bereits in Bezug genommen wurde.

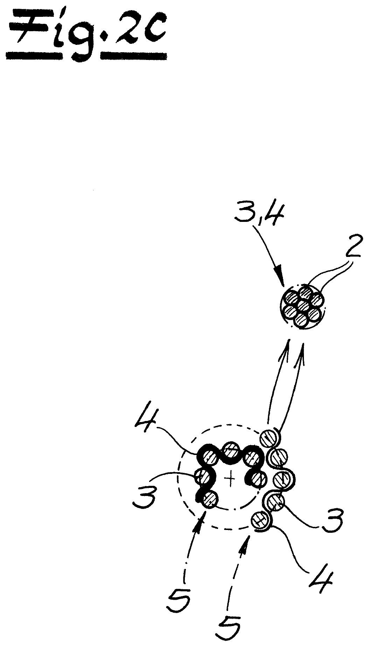

Bei der besonders bevorzugten Variante nach Fig. 2C zur Herstellung des rundgewebten Seiles 1 wird so vorgegangen, dass eine oder mehrere Lagen 5 jeweils eines Schlauchgewebes aus den Kettfäden 3 oder den Schussfäden 4 hergestellt wird. Tatsächlich kann das rundgewebte Seil 1 in diesem Zusammenhang im Zuge eines Einfach- oder Doppelschlauchwebverfahrens hergestellt werden. Die Schlauchgewebe setzen sich wiederum aus den zuvor bereits angesprochenen Kettfäden 3 in Längsrichtung und den demgegenüber querverlaufenden Schussfäden 4 zusammen. Außerdem mag eine nicht dargestellte Einlage realisiert sein. Bei der Einlage kann es sich um ein Gelege aus weiteren nicht gezeigten Kunststofffäden handeln. Grundsätzlich sind auch andere Einlagen denkbar.

Die Fäden 3, 4 verfügen nach dem Ausführungsbeispiel über eine Feinheit von wenigstens 20 dtex. Außerdem sind die Fäden 3, 4 als hochzugfeste Fäden 3, 4 mit einer feinheitsbezogenen Höchstzugkraft von wenigstens 10 cN/dtex ausgerüstet. Bei den Fäden 3, 4 handelt es sich um Kunststofffäden 3, 4 und insbesondere Thermoplastfäden. Das heißt, die aus den einzelnen Kunststofffasern 2 aufgebauten Fäden 3, 4 greifen auf Kunststofffasern 2 aus beispielsweise PE, PA, PET, PP usw. zurück.

Ganz besonders bevorzugt sind an dieser Stelle Kunststofffasern 2 aus einem Polyolefin mit ultrahoher Molekularmasse, sog. UHM-WPE (Ultra-High-Molecular-Weight Polyethylene). Derartige Kunststofffasern 2 und hieraus hergestellte Fäden 3, 4 werden beispielsweise unter dem Markennamen Dyneema^{®} verkauft. Hierauf ist die Erfindung selbstverständlich nicht beschränkt. Denn grundsätzlich können an dieser Stelle auch Kunststofffasern 2 aus Polyamid (PA) oder Polyester bzw. Polyethylenterephthalat (PET) zum Einsatz kommen. Selbstverständlich sind auch Kombinationen denkbar. Das heißt, in diesem Fall ist der betreffende Faden 3, 4 aus Kunststofffasern 2 unterschiedlicher Kunststoffe aufgebaut und hergestellt.

Die Bruchkraft des auf diese Weise hergestellten Ringes stellt sich insgesamt so dar bzw. lässt sich derart bestimmen, dass die Summe der einzelnen Seilbruchkräfte ermittelt wird. Das heißt, jedes einzelne Seil 1 verfügt über eine entsprechende Bruchkraft. Sofern beispielsweise die feinheitsbezogene Höchstzugkraft 10 cN/dtex beträgt und das betreffende Seil 1 über eine Feinheit von 20 dtex verfügt, bemisst sich die Höchstzugkraft zu 200 cN bzw. 2 N für das betrachtete Seil 1 (10 cN/dtex · 20 dtx = 200 cN). Im Regelfall wird jedoch mit Feinheiten von wenigstens 100 dtex gearbeitet, so dass die Höchstzugkraft des Seiles 1 bei 10 N liegt.

Typische Seildurchmesser von beispielsweise 4 mm führen zu einer Festigkeit von meistens mehr als 100 N, so dass bei Rückgriff auf beispielsweise sechs Seile 1 für das in der Fig. 1 dargestellte Seilwerk eine Bruchkraft von mindestens 600 N beobachtet wird. Von dieser Summe der einzelnen Seilbruchkräfte muss dann noch ein Legekraftverlust abgezogen werden, um insgesamt die Bruchkraft des Ringes bestimmen und vorgeben zu können. Der Legekraftverlust beträgt typischerweise ca. 10 % der vorgenannten Summe (d. h. 10 % von 600 N = 60 N), so dass im Beispielfall von einer Bruchkraft des Ringes von wenigstens 500 N ausgegangen werden kann.

In vergleichbarer Weise stellt sich dann auch die Bruchkraft des aus dem Ring hergestellten Kettengliedes 6 und damit der Kette insgesamt dar.

## Patentansprüche

1. Kette, mit mehreren untereinander verbundenen Kettengliedern (6), die jeweils aus Kunststofffäden (3, 4) hergestellt sind, wobei
jedes Kettenglied (6) als wenigstens ein endlos gelegter Ring aus geschlagenem Seilwerk auf Basis der Kunststofffäden (3, 4), ausgebildet ist, und wobei
das geschlagene Seilwerk im Wesentlichen aus zumindest einem fortlaufenden wendeiförmig um einen Kern herumgelegten Seil (1) aus den Kunststofffäden (3, 4) besteht,
**dadurch gekennzeichnet, dass**
das Seil (1) als rundgewebtes Seil (1) ausgebildet ist, wobei sich die runde Querschnittsform des Seiles (1) dadurch ergibt, dass an dieser Stelle mit einem schlauchförmigen Rundgewebe und gegebenenfalls einer Einlage gearbeitet wird.

2. Kette nach Anspruch 1, **dadurch gekennzeichnet, dass** das Seilwerk als Grummet ausgebildet ist.

3. Kette nach Anspruch 1 oder 2, **dadurch gekennzeichnet, dass** die Kunststofffäden (3, 4) als Multifilamentfäden aus Kunststofffasern (2) ausgebildet sind.

4. Kette nach einem der Ansprüche 1 bis 3, **dadurch gekennzeichnet, dass** die Kunststofffäden (3, 4) als hochzugfeste Fäden mit einer feinheitsbezogenen Höchstzugkraft von wenigstens 5 cN/dtex, meistens von 8 cN/dtex und mehr, insbesondere von wenigstens 10 cN/dtex, vorzugsweise von 20 cN/dtex und mehr sowie ganz besonders bevorzugt von mindestens 30 cN/dtex ausgebildet sind.

5. Kette nach einem der Ansprüche 1 bis 4, **dadurch gekennzeichnet, dass** die Kunststofffäden (3, 4) aus insbesondere Thermoplastfasern als Kunststofffasern (2) ausgebildet sind, beispielsweise auf Basis von PE, PA, PET, PP usw.

6. Kette nach Anspruch 5, **dadurch gekennzeichnet, dass** es sich bei den Thermoplastfasern um solche aus einem Polyolefin mit ultrahoher Molekularmasse handelt.

7. Kette nach einem der Ansprüche 1 bis 6, **dadurch gekennzeichnet, dass** die Feinheit der Kunststofffäden (3, 4) wenigstens 20 dtex beträgt.

8. Kette nach einem der Ansprüche 1 bis 7, **dadurch gekennzeichnet, dass** jeweilige Enden (1a, 1b) des oder der Seile (1) unter äußere Seile (1) einer äußeren Seillage in Schlagrichtung geführt sind.

9. Kette nach einem der Ansprüche 1 bis 8, **dadurch gekennzeichnet, dass** die Kettenglieder (6) eine Bruchfestigkeit bzw. Bruchkraft von zumindest 1 kN aufweisen.

10. Kette nach einem der Ansprüche 1 bis 9, **dadurch gekennzeichnet, dass** die Kettenglieder (6) unmittelbar ineinandergreifen oder über Verbindungsmittel (7) miteinander gekoppelt sind.

11. Verwendung einer Kette nach einem der Ansprüche 1 bis 10 zum Lagern, Sichern, Heben und Handhaben von Frachtgut, Ladung und Fahrzeugen.

## Claims

1. Chain with several chain links (6) connected to each other, each of which are made of plastic threads (3, 4), wherein
each chain link (6) is configured as at least one endlessly laid ring of twisted rope on the basis of the plastic threads (3, 4), and wherein
the twisted rope essentially comprises a continuous rope (1) of the plastic threads (3, 4), helically laid around a core,
**characterised in that**
the rope (1) is in the form of a round-woven rope (1), wherein the round cross-sectional shape of the rope (1) is produced **in that** at this point a tubular round woven fabric and, possibly, an insert are used.

2. Chain according to claim 1, **characterised in that** the rope is formed as grommet.

3. Chain according to claim 1 or 2, **characterised in that** the plastic threads (3, 4) are designed as multifilament threads made of plastic fibres (2).

4. Chain according to any one of claims 1 to 3, **characterised in that** the plastic threads (3, 4) are designed as high-tensile threads with a finenessrelated maximum tensile strength of at least 5 cN/dtex, mostly of 8 cN/dtex and more, more particularly of at least 10 cN/dtex, preferably of 20 cN/dtex and more, and very particularly preferably of at least 30 cN/dtex.

5. Chain according to any one of claims 1 to 4, **characterised in that** the plastic threads (3, 4) are made of, in particular, thermoplastic fibres, as plastic fibres (2), based on PE, PA, PET, PP etc.

6. Chain according to claim 5, **characterised in that** the thermoplastic fibres are ones made of a polyolefin with an ultrahigh molecular mass.

7. Chain according to any one of claims 1 to 6, **characterised in that** fineness of the plastic treads (3, 4) is at least 20 dtex.

8. Chain according to any one of claims 1 to 7, **characterised in that** the respective ends (1a, 1b) of the rope(s) (1) are run under outer ropes (1) of an outer rope layer in the laying direction.

9. Chain according to any one of claims 1 to 8, **characterised in that** the chain links (6) have a breaking strength or breaking force of at least 1 kN.

10. Chain according to any one of claims 1 to 9, **characterised in that** the chain links (6) engage with each other directly or are coupled to each other by means of connection means (7).

11. Use of a chain according to any one of claims 1 to 10, for storing, securing, lifting and handling cargos, loads and vehicles.

## Revendications

1. Chaîne, pourvue de plusieurs maillons (6) de chaîne, assemblés entre eux, qui sont fabriqués chacun en fils (3, 4) de matière plastique,
chaque maillon (6) de chaîne étant conçu sous la forme d'au moins un anneau posé en continu en en cordage frappé à base des fils (3, 4), de matière plastique et le cordage frappé étant constitué majoritairement d'au moins un cordage (1) en les fils (3, 4) de matière plastique, posé en continu sous forme hélicoïdale autour d'un noyau,
**caractérisée en ce que**
la corde (1) est conçue sous la forme d'une corde (1) tissée sous forme circulaire, la forme de section transversale ronde de la corde (1) résultant de ce qu'en cet endroit, l'on travaille avec un tissu rond de forme tubulaire et le cas échéant d'un entoilage.

2. Chaîne selon la revendication 1, **caractérisée en ce que** le cordage est conçu sous la forme d'une estrope.

3. Chaîne selon la revendication 1 ou 2, **caractérisée en ce que** les fils (3, 4) de matière plastique sont conçus sous la forme de multifilaments en fibres (2) de matière plastique

4. Chaîne selon l'une quelconque des revendications 1 à 3, **caractérisée en ce que** les fils (3, 4) de matière plastique sont conçus sous la forme de fils à haute résistance à la traction, faisant preuve d'une résistance à la traction maximale en rapport à la finesse d'au moins 5 cN/dtex, la plupart du temps de 8 cN/dtex et plus, notamment d'au moins 10 cN/dtex, de préférence de 20 cN/dtex et plus, ainsi que de manière particulièrement préférentielle, d'au moins 30 cN/dtex.

5. Chaîne selon l'une quelconque des revendications 1 à 4, **caractérisée en ce que** les fils (3, 4) de matière plastique sont conçus notamment de fibres thermoplastiques en tant que fibres (2) en matière plastique, par exemple sur la base de PE, PA, PET, PP, etc.

6. Chaîne selon la revendication 5, **caractérisée en ce que** les fibres thermoplastiques sont des fibres en polyoléfine, à masse moléculaire ultra-élevée t.

7. Chaîne selon l'une quelconque des revendications 1 à 6, **caractérisée en ce que** la finesse des fils (3, 4) de matière plastique est d'au moins 20 dtex.

8. Chaîne selon l'une quelconque des revendications 1 à 7, **caractérisée en ce que** des extrémités (1a, 1b) respectives de la ou des cordes (1) sont guidées dans le sens de commettage sous des cordes (1) extérieures d'une couche extérieure de corde.

9. Chaîne selon l'une quelconque des revendications 1 à 8, **caractérisée en ce que** les maillons (6) de la chaîne font preuve d'une résistance à la rupture ou d'une force de rupture d'au moins 1 kN.

10. Chaîne selon l'une quelconque des revendications 1 à 9, **caractérisée en ce que** les maillons (6) de la chaîne s'engagent directement les uns dans les autres ou sont couplés les uns aux autres par l'intermédiaire de moyens d'assemblage (7).

11. Utilisation d'une chaîne selon l'une quelconque des revendications à 1 à 10 pour stocker, sécuriser, lever et manipuler des cargaisons, des chargements et des véhicules.
